# EUROPEAN PATENT SPECIFICATION

(11) **EP 2 727 703 B1**
(45) Date of publication and mention of the grant of the patent: **14.06.2017**
(21) Application number: 13190258.7
(22) Date of filing: 25.10.2013
(51) Int. Cl.: B29C 45/74, B29C 45/18, B29C 45/62

(54) **Injection molding machine and injection molding method**
Spritzgießmaschine und Spritzgießverfahren
Machine de moulage par injection et procédé de moulage par injection

(30) Priority: 06.11.2012 JP 2012244199
(43) Date of publication of application: 07.05.2014
(73) Proprietor: SUMITOMO HEAVY INDUSTRIES, LTD., Tokyo 141-6025 (JP)
(72) Inventor: Arakawa, Yoshihiko, Kanagawa, 237-8555 (JP)
(74) Representative: Hoffmann Eitle

(56) References cited:
- JP-A- H10 151 652
- JP-A- S54 131 788
- JP-A- 2004 050 415
- JP-A- 2004 322 438
- JP-A- 2010 149 354
- JP-A- 2010 162 716
- JP-A- 2011 110 748
- US-A- 2 354 363
- US-A- 4 158 540
- US-A1- 2009 053 348

## Description

### BACKGROUND OF THE INVENTION

### 1. Field of the Invention

The present invention relates to an injection molding machine and an injection molding method.

### 2. Description of the Related Art

Injection molding machines include a cylinder into which a molding material (e.g., resin pellets) is supplied, a screw that is arranged to be rotatable and movable back and forth within the cylinder, and a band heater surrounding the outer periphery of the cylinder (See e.g., Japanese Unexamined Patent Publication No. 2009-137083). Resin that is supplied to a spiral groove formed at the screw is transported forward as the screw rotates, and the resin within the groove is gradually melted by the heat from the cylinder, for example. As the molten resin is transported toward the front side of the screw and is accumulated at the front side, the screw recedes toward the rear side. Then, when the screw is driven to move forward, the molten resin accumulated at the front side of the screw is ejected from an injection nozzle that is arranged at the front end of the cylinder and the molten resin is filled into a cavity of a mold unit. The molten resin that is filled into the cavity is then solidified to form a molding product.

In conventional injection molding machines, the heating efficiency for heating the molding material is rather low because the cylinder is arranged between the band heater, which is the heat source, and the molding material.

US 2009/053348 A1 mentions an injection apparatus of a molding machine which comprises a cylinder to which a molding material is supplied. The apparatus comprises a dry air supply apparatus for supplying a dry gas to the heating cylinder.

JP H10 151652 A discloses an injection apparatus wherein a plurality of hot air gas passages opened at the position of the screw groove part in the vicinity of the leading end position of a supply part or the rear end part of a compression part through the axial part of a screw are provided.

A further document is US 4,158,540 A1 referring to a process and apparatus for manufacturing molded parts from granulated plastic materials.

Another document, US 2, 354, 363 A1, mentions means for heating thermoplastic materials for molding, which comprises a cylinder having an open end surrounded by a steam jacket, said cylinder having ducts formed therein communicating with the steam jacket and leading to an end surface, a head closing the open end of the cylinder and having a hollow core extending into and spaced from the cylinder wall, said head having ducts communicating with the ducts in the cylinder and leading into the hollow core, and means for pressure sealing the juncture of the ducts of said cylinder with the ducts of said head.

JP 2010 149354 A refers to a preplasticating injection machine. The resin material in a feed opening of a plastication cylinder is controlled at a low level and a heated gas flow whose flow amount is controlled in accordance with a desired starvation rate is passed through the resin material in the plastication cylinder by a gas supply means and a gas discharge means.

Further documents are JP 2004 322438 A and JP S54 131788A.

### SUMMARY OF THE INVENTION

It is an object of at least one embodiment of the present invention to provide an injection molding machine with improved heating efficiency for heating the molding material.

According to the present invention, an injection molding machine includes the features of claim 1.

According to an aspect of the present invention, an injection molding machine with improved heating efficiency for heating the molding material may be provided.

Further, the present invention refers to a method according to claim 8.

### BRIEF DESCRIPTION OF THE DRAWINGS

FIG. 1 illustrates an exemplary configuration of an injection molding machine according to a first embodiment of the present invention;
FIG. 2 is a cross-sectional view of a cylinder of the injection molding machine according to the first embodiment;
FIG. 3 illustrates a supply port for supplying a heating medium that is arranged at the inner wall of the cylinder of the injection molding machine according to the first embodiment;
FIG. 4 illustrates an exemplary configuration of an injection molding machine according to a second embodiment of the present invention; and
FIG. 5 illustrates an exemplary configuration of an injection molding machine according to a third embodiment of the present invention.

### DETAILED DESCRIPTION OF THE PREFERRED EMBODIMENT

In the following, embodiments of the present invention are described with reference to the accompanying drawings. It is noted that identical or corresponding features illustrated in more than one of the drawings may be identified by the same reference numerals and their descriptions may be omitted. Also, in the following descriptions, it is assumed that a resin injection direction corresponds to a forward direction and the direction opposite the resin injection direction corresponds to a backward direction.

### [First Embodiment]

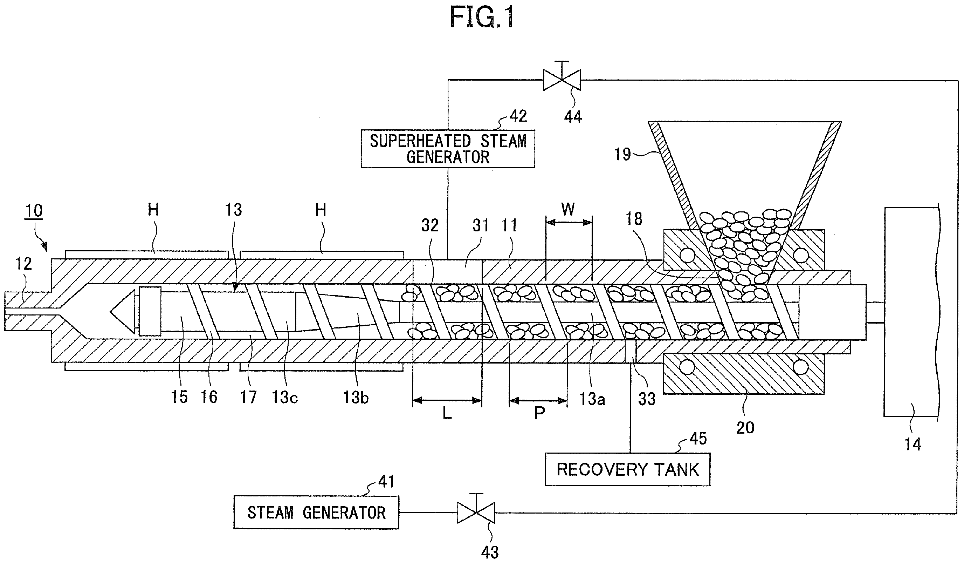

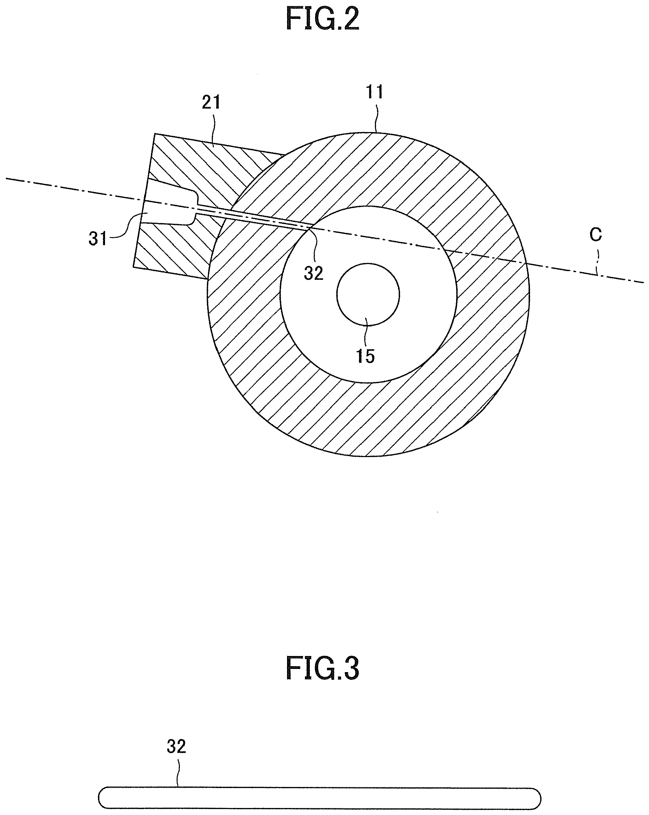

FIG. 1 illustrates an exemplary configuration of an injection molding machine 10 according to a first embodiment of the present invention. Note that in FIG. 1, an illustration of a nozzle block 21, which is illustrated in FIG. 2, is omitted. FIG. 2 is a cross-sectional view of a cylinder 11 of the injection molding machine 10 according to the first embodiment. FIG. 2 illustrates a cross-sectional view of the cylinder 11 cut along a plane perpendicular to the axial direction of the cylinder 11. Note that in FIG. 2, an illustration of a flight 16, which is illustrated in FIG. 1, is omitted for the purpose of simplifying the drawing. FIG. 3 illustrates a supply port 32 for supplying a heating medium that is formed at the inner wall of the cylinder 11 of the injection molding machine 10 according to the first embodiment.

The injection molding machine 10 includes the cylinder 11 into which a molding material (e.g., resin pellets) is supplied, an injection nozzle 12 that is arranged at the font end of the cylinder 12, a screw 13 that is arranged to be rotatable and movable back and forth within the cylinder 11, and a drive unit 14 that is arranged at the rear side of the cylinder 11. The drive unit 14 includes a plasticizing motor for rotating the screw 13 and an injection motor for moving the screw 13 back and forth.

The screw 13 is arranged to be rotatable and movable back and forth within the cylinder 11. The screw 13 includes a rotational shaft 15 and a flight 16. The rotational shaft 15 is arranged to be substantially coaxial with the cylinder 11. The flight 16 is arranged spirally around the rotational shaft 15. A spiral groove 17 is formed along the flight 16. When the screw 13 rotates, the flight 16 moves, and resin supplied to the groove 17 is transported forward.

The screw 13 is divided into a supply part 13a, a compression part 13b, and a metering part 13c along the axial direction from the rear side (hopper 19 side) to the front side (injection nozzle 12 side). The supply part 13a is where the resin is received and transported forward. The compression part 13b is where the supplied resin is compressed and melted. The metering part 13c is where the molten resin is plasticized at predetermined amounts. The depth of the groove 17 of the screw 13 is arranged to be relatively deep at the supply part 13a, relatively shallow at the metering part 13c, and is arranged to become increasingly shallower toward the front side at the compression part 13b.

Note that the configuration of the screw 13 used in the present invention is not particularly limited to the above example. In other examples, the depth of the groove 17 of the screw 13 may be fixed, or the screw compression ratio may be fixed.

A resin supply port 18 as a molding material supply port is formed at the rear part of the cylinder 11, and resin is supplied to the cylinder 11 from a hopper 19 via the resin supply port 18. A cooler 20 is arranged at the rear part of the cylinder 11 in order to prevent the resin from melting around the resin supply port 18. The cooler 20 may be a water-cooling jacket, for example.

Note that although the hopper 19 for supplying resin to the cylinder 11 is arranged at the rear part of the cylinder 11 in the present embodiment, in other embodiments, a supply unit that is capable of adjusting the amount of resin supplied may be used instead of the hopper 19.

In the following, operations of the injection molding machine 10 are described.

When the plasticizing motor of the drive unit 14 is driven and the screw 13 is rotated, resin supplied to the cylinder 11 via the resin supply port 18 is transported forward and melted. The molten resin is transported toward the front side of the screw 13. As the resin accumulates at the front side of the screw 13, the crew 13 recedes toward the rear side. When a predetermined amount of resin is accumulated at the front side of the screw 13, rotation of the screw 13 is stopped.

Then, when the injection motor of the drive unit 14 is driven to move the screw 13 forward, the resin accumulated at the front side of the screw 13 is ejected from the injection nozzle 12 and filled into a cavity of a mold unit. The molten resin filled into the cavity is then solidified to form a molding product.

In the following, ways in which the resin within the cylinder 11 may be heated are described.

As illustrated in FIG. 1, in order to improve the heating efficiency for heating the resin within the cylinder 11, a nozzle part 31 as an embodiment of a supply part for supplying a heating medium is arranged at the cylinder 11. The heating medium supplied to the cylinder 11 by the nozzle part 31 is for heating the resin within the cylinder 11 and may be a gas, a liquid, or a combination thereof. Because the heating medium comes into direct contact with the resin accommodated within the cylinder 11, the heating efficiency for heating the resin may be improved. By improving the heating efficiency for heating the resin, the temperature gradient of the resin in the axial direction of the cylinder 11 may be raised so that the overall length of the cylinder 11 may be reduced, for example. Also, because the heating medium comes into direct contact with the resin inside the cylinder 11, temperature control of the resin may be facilitated, the time required for stabilizing the resin temperature may be reduced, and thermal degradation of the resin may be prevented. Further, the heating medium may also be used to transport gas that is generated when the resin is melted outside the cylinder 11.

The heating medium supplied to the cylinder 11 comes into contact with the inner wall of the cylinder 11 and the surface of the screw 13 and heats both the cylinder 11 and the screw 13 substantially at the same time. Thus, the space between the inner wall of the cylinder 11 and the flight 16 of the screw 13 may be less likely to change so that the screw 13 may be easily pushed into and pulled out of the cylinder 11. Also, in the present embodiment, the cylinder 11 may not have to be heated to increase the diameter of the cylinder 11 upon pushing/pulling the screw 13 into/out of the cylinder 11.

As illustrated in FIG.2, the nozzle part 31 may be a continuous opening formed through the cylinder 11 and a nozzle block 21, for example. The nozzle block 21 is fixed to the cylinder 11 in the example illustrated in FIG. 2. Note that in alternative embodiments, the nozzle block 21 may be omitted and the nozzle part 31 may be an opening formed through the cylinder 11.

Also, although the nozzle part 31 of the present embodiment is arranged into an opening formed at the cylinder 11, in other embodiments, the nozzle part 31 may be a separate tubular structure that is inserted through a hole formed at the cylinder 11, for example.

Although the position of the nozzle part 31 is not particularly limited, the nozzle part 31 is preferably arranged at the front side of the cooler 20 in order to improve the heating efficiency. Also, the nozzle part 31 may preferably be arranged at the rear side of a resin melting start position at which the resin starts melting. Because resin is not yet melted at the rear side of the resin melting start position, the heating medium may flow more easily through gaps between the resin.

A supply port (ejection port) 32 of the nozzle part 31 is formed at the inner wall of the cylinder 11. As illustrated in FIGS. 1-3, the supply port 32 of the nozzle part 31 may be arranged into an elongated shape extending in the axial direction of the screw 13. The flow of the heating medium supplied from the nozzle part 13 into the groove 17 may be arranged to be relatively wide so as to reduce the space within the groove 17 that may allow generation of a vortex flow. In this way, the heating medium may flow easily along the flight 16.

Note that although the supply port 32 of the nozzle part 31 is arranged into an elongated shape extending in the axial direction of the screw 13 in the present embodiment, the supply port 32 may alternatively be arranged into an elongated shape extending in a diagonal direction with respect to the axial direction of the screw 13. For example, the supply port 32 of the nozzle part 31 may be arranged into an elongated shape extending in any direction that is perpendicular to the spiral fight 16. In this way, the heating medium may easily flow along the flight 16. Note that the shape of the supply port 32 of the nozzle part 31 is not limited to a particular shape and may be rectangular or oval, for example. According to the invention, a length L of the supply port 32 in the screw axial direction (see FIG. 1) is arranged to be longer than a pitch P of the flight 16 in the screw axial direction (see FIG. 1). In this way, the width of the mainstream of the heating medium supplied to the groove 17 from the nozzle part 31 may be at least half the width W of the groove 17 in the screw axial direction (see FIG. 1) regardless of the position of the screw 13 with respect to the cylinder 11. As a result, generation of a vortex flow may be prevented.

As illustrated in FIG. 2, a center line C of the nozzle part 31 may deviate from the axis of the rotational shaft 15 of the screw 13 in cross-sectional view. In this way, the heating medium ejected from the nozzle part 31 may be prevented from diverging to flow in two different directions, for example. That is, the heating medium may be arranged to flow in one direction along the spiral flight 16.

As illustrated in FIG. 2, the center line C of the nozzle part 31 may not be tangential with the inner wall of the cylinder 11 in cross-sectional view and may intersect with the inner wall of the cylinder 11 twice. In this way, the heating medium ejected from the nozzle part 31 may be prevented from entering the small space between the inner wall of the cylinder 11 and the flight 16 of the screw 13 so that the heating medium may flow in one direction along the flight 16.

The temperature of the heating medium ejected from the nozzle part 13 is preferably arranged to be lower than the temperature of the resin in order to prevent the nozzle part 31 from getting clogged with molten resin. In this case, the resin is heated and melted by the heating medium and a heater H, which is described below.

As illustrated in FIG. 1, the cylinder 11 includes a discharge hole 33 as an embodiment of a discharge part for discharging the heating medium within the cylinder 11 outside the cylinder. The heating medium discharged outside the cylinder 11 may be a gas, a liquid, or a combination thereof.

Although the position of the discharge hole 33 is not particularly limited, the discharge hole 33 is preferably arranged at the rear side of the resin melting start position of the cylinder 11 so that the heating medium may easily flow within the cylinder 11.

In the case where both the discharge hole 33 and the nozzle part 31 are arranged at the rear side of the resin melting start position of the cylinder 11, the heater H for heating the cylinder 11 may be arranged at the front side of the resin melting start position. The heater H is arranged to surround the outer periphery of the cylinder 11 and is configured to heat the cylinder 11 so that the resin within the cylinder 11 may be heated.

The discharge hole 33 may be arranged at the rear side of the nozzle part 31. As the heating medium ejected from the nozzle part 31 flows toward the rear side, the heat of the heating medium is transferred to the resin, the cylinder 11, and the screw 13, and the heating medium is gradually cooled as a result. The temperature of the cylinder 11 tends to be cooler toward the rear side so that heat that needs to be absorbed by the cooler 20 may be reduced and heating efficiency may be improved.

The discharge hole 33 may be arranged at the front side of the cooler 20 in order to improve the heating efficiency. In this case, the heating medium hardly comes into contact with the rear part of the cylinder 11 upon being discharged outside the cylinder 11. Thus, the temperature at the rear part of the cylinder 11 may easily decrease and excess heat to be absorbed by the cooler 20 may be reduced so that the heating efficiency may be improved.

The heating medium discharged from the discharge hole 33 is collected in a recovery tank 45 and cooled at the recovery tank 45. The heating medium collected in the recovery tank 45 (e.g., water) may be transported to a heater (e.g., steam generator 41 of FIG. 1) so that the heating medium may be reheated, for example.

In one embodiment, the nozzle part 31 may supply superheated steam as the heating medium for heating the resin within the cylinder 11. Because superheated steam is generated by heating saturated vapor and is therefore dry, the resin may be dried by the superheated steam. Also, because superheated steam hardly includes any oxygen gas, oxidization of the resin may be prevented.

The steam generator 41 may generate steam by heating water. Then, the steam generated by the steam generator 41 may be heated further by a superheated steam generator 42 to generate superheated steam. The superheated steam generated by the superheated steam generator 42 may then be supplied to the cylinder 11 via the nozzle part 31. In the present embodiment, the air pressure within the cylinder 11 is arranged to be at atmospheric pressure. However, the air pressure of the cylinder 11 may alternatively be arranged to be lower or higher than the atmospheric pressure.

The steam generator 41 may be a boiler, for example, that is configured to generate steam by heating liquid water. The steam generator 41 may be a part of the injection molding machine 10 or may be a separate unit from the injection molding machine 10. For example, the steam generator 41 may be a part of a molding product manufacturing plant facility. Components such as a depressurizing valve 43 and a flow rate adjustment valve 44 may be arranged at intermediate points of a piping interconnecting the steam generator 41 and the superheated steam generator 42.

The superheated steam generator 42 as an embodiment of a heater for heating the heating medium to be supplied to the cylinder 11 may heat the steam generated by the steam generator 41 using a heater to generate superheated steam, for example. The superheated steam generator 42 may be arranged at the injection molding machine 10, for example.

At least a part of the superheated steam may change phase from gas to liquid within the cylinder 11. In this case, resin may be heated by the condensation heat that is emitted when gas is condensed into liquid. Because the condensation heat of water is relatively large, desirably high heat transfer efficiency may be achieved in this case. The condensation heat transfer occurs around a point where the temperature of gas is near the condensation point.

Note that although the axial direction of the cylinder 11 is arranged to be horizontal in the present embodiment, in the case where at least a part of the superheated steam within the cylinder 11 changes phase from gas to liquid, the axial direction of the cylinder 11 may alternatively be diagonal with respect to the horizontal direction, and the discharge hole 33 arranged at the rear side of the nozzle part 31 may be arranged at a lower position than the nozzle part 31. In this case, the superheated steam that is converted into water within the cylinder 11 may be easily discharged from the cylinder 11 so that water may be prevented from accumulating within the cylinder 11.

### [Second Embodiment]

In the above first embodiment, the heating medium that is discharged from the cylinder 11 at a high temperature is collected in the recovery tank 45 to be cooled at the recovery tank 45.

In a second embodiment of the present invention, in order to improve heating efficiency, a reflux part is arranged to prompt at least a part of the heating medium discharged outside the cylinder 11 to flow back to the superheated steam generator 42 corresponding to the heater that heats the heating medium to be supplied to the cylinder 11. In the following, features of the present embodiment that differ from those of the first embodiment are described.

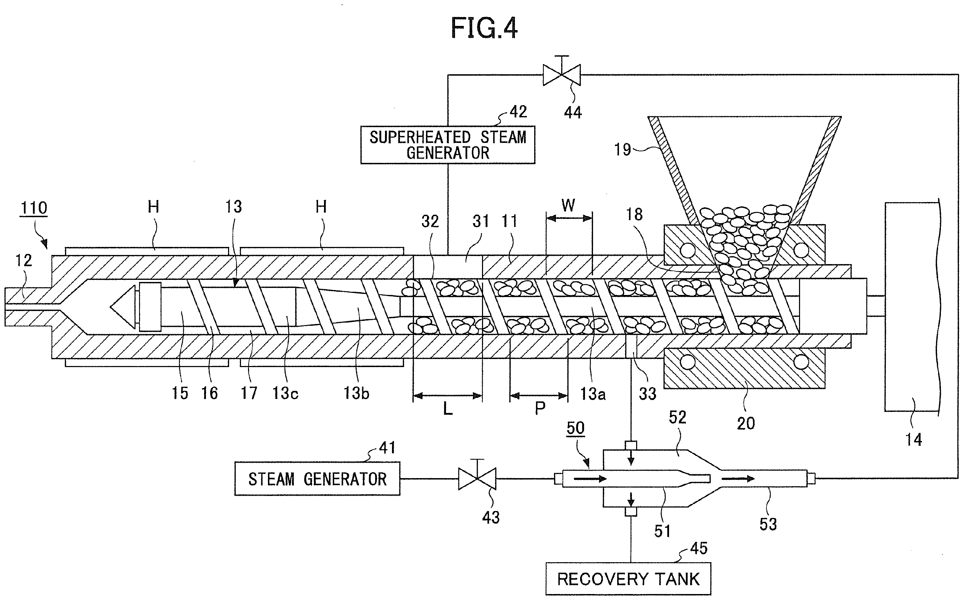

FIG. 4 illustrates an exemplary configuration of an injection molding machine 110 according to the second embodiment. In FIG. 4, the injection molding machine 110 includes an ejector 50 that arranges at least a part of the heating medium discharged outside the cylinder 11 to flow back to the superheated steam generator 42 corresponding to the heater for heating the heating medium to be supplied to the cylinder 11. The ejector 50 is an embodiment of the reflux part for returning the heating medium back to the heater. The ejector 50 may return at least a part of the heating medium discharged outside the cylinder 11 back to the superheated steam generator 42 at a temperature that is higher than room temperature.

The ejector 50 includes an ejector nozzle 51, a suction chamber 52, and a diffuser 53. The ejector nozzle 51 ejects the steam supplied from the steam generator 41 into the suction chamber 52 to thereby generate suction force for suctioning the steam within the cylinder 11 into the suction chamber 52. In this way, at least a part of the steam suctioned into the suction chamber 52 may flow back to the superheated steam generator 42 via the diffuser 53 along with the steam ejected from the ejector nozzle 51 to be reheated by the superheated steam generator 42 and re-supplied to the cylinder 11 via the nozzle part 31.

In the case where at least a part of the superheated steam supplied to the cylinder 11 via the nozzle part 31 changes phase from gas to liquid inside the cylinder 11, the heating medium discharged outside the discharge hole 33 may include both steam (vaporized water) and liquid water.

In the above case, when suctioning the heating medium into the suction chamber 52, the liquid water accommodated within the cylinder 11 may be suctioned into the suction chamber 52 along with steam. In this way, liquid water may be prevented from accumulating within the cylinder 11.

The suction chamber 52 may include a discharge outlet for discharging liquid water, for example. The liquid water discharged from the discharge outlet may be transported to the recovery tank 45 along with steam to be cooled at the recovery tank 45.

Of the steam that has been suctioned into the suction chamber 52, a large portion thereof may be flown back to the superheated steam generator 42 while a remaining portion of the steam may be transported to the recovery tank 45.

Note that although the ejector 50 of the present embodiment is configured to transport water that is warmer than room temperature to the recovery tank 45, in alternative embodiments, the water may be transported to the steam generator 41. In this case, the steam generator 41 may heat the water to generate steam so that heating efficiency may be further improved, for example.

Also, although the ejector 50 is used as the reflux part in the present embodiment, the reflux part is not limited to a particular configuration. For example, a sirocco fan may be used as the reflux part. In this case, the sirocco fan may be configured to suction the steam accommodated within the cylinder 11 and transport the suctioned steam to a flow path for supplying steam generated by the steam generator 41 to the superheated steam generator 42, for example.

### [Third Embodiment]

In the above first embodiment, the high-temperature heating medium discharged outside the cylinder 11 is collected in the recovery tank 45 to be cooled at the recovery tank 45.

In a third embodiment of the present invention, to improve heating efficiency, a heat exchange part is arranged for heating the heating medium to be supplied to the cylinder 11 using the heating medium discharged from the cylinder 11. In the following, features of the third embodiment that differ from those of the first embodiment are described.

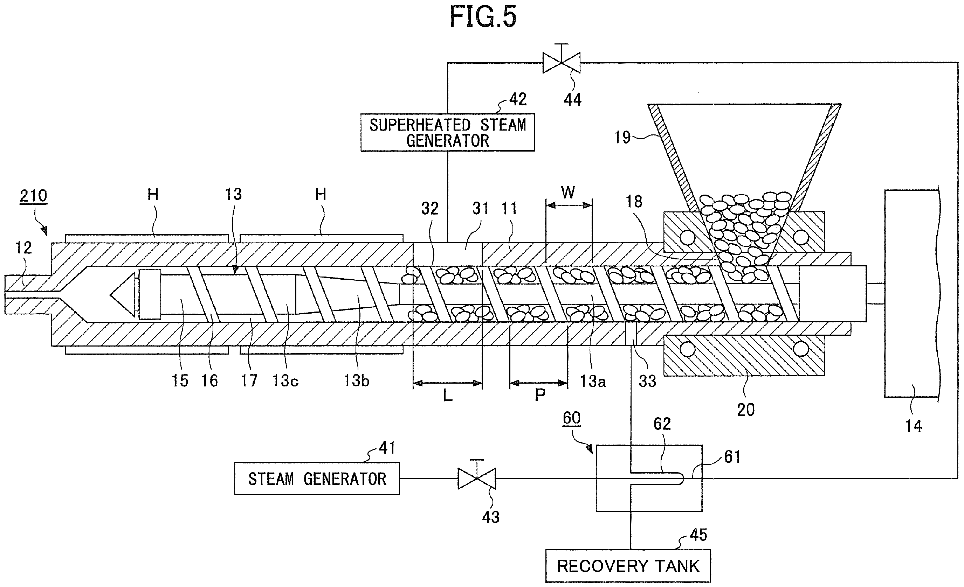

FIG. 5 illustrates an exemplary configuration of an injection molding machine 210 according to the third embodiment. In FIG. 5, the injection molding machine 210 includes a heat exchange part 60 that is configured to heat the heating medium to be supplied to the cylinder using the heating medium discharged from the cylinder 11. By using the heat of the heating medium discharged from the cylinder 11 to heat the heating medium to be supplied to the cylinder 11, heating efficiency may be improved for heating the resin within the cylinder 11 and energy resources may be conserved, for example.

As illustrated in FIG. 5, the heat exchange part 60 may include a first heat exchange path 61 and a second heat exchange path 62. The first heat exchange path 61 is arranged at an intermediate point of a flow path for supplying the steam generated by the steam generator 41 to the superheated steam generator 42. The second heat exchange path 62 is arranged at an intermediate point of a flow path for supplying the heating medium (e.g., steam and/or liquid water) discharged outside the cylinder 11 to the recovery tank 45. The first heat exchange path 61 and the second heat exchange path 62 are arranged to be adjacent to one another so that the heat of the heating medium (e.g., steam) flowing though the second heat exchange path 62 may be transferred to the heating medium (e.g., steam) flowing through the first heat exchange path 61. By heating the heating medium (e.g., steam) to be supplied to the cylinder 11 using the heat of the heating medium (e.g., steam) discharged outside the cylinder 11, heating efficiency may be improved, for example.

Note that although the heat exchange part 60 of the above illustrated embodiment is configured to heat the heating medium (e.g., steam) being supplied from the steam generator 41 to the superheated steam generator 42, the heat exchange part 60 may alternatively be arranged to heat the liquid water within the steam generator 41, for example.

Also, in other alternative embodiments, the heat exchange part 60 of the third embodiment may used in combination with the reflux part of the second embodiment. For example, the reflux part may be configured to return a portion of the heating medium discharged outside the cylinder 11 to the superheated steam generator 42, and the heat exchange part 60 may be configured to use the heat of the remaining portion of the heating medium discharged outside the cylinder 11 to heat the heating medium to be supplied to the cylinder 11.

While the injection molding machine of the present invention has been described above by way of illustrative embodiments, the present invention is not limited to these embodiments, and numerous variations and modifications may be made without departing from the scope of the present invention.

For example, although the nozzle part 31 in the above illustrated embodiments supplies superheated steam as the heating medium for heating the resin within the cylinder 11, the type of heating medium used is not limited to superheated steam. That is, any suitable type of heating medium may be selectively used according to the type of resin used. For example, in the case where the resin used is easily degraded by water, an inert gas such as nitrogen gas or argon gas may be used as the heating medium.

Also, although the nozzle part 31 in the above illustrated embodiments supplies superheated steam to the cylinder 11 as the heating medium that changes phase from gas to liquid within the cylinder 11, in alternative embodiments, a halogenated compound gas, an ionic compound gas, or a glycol compound gas may be supplied to the cylinder 11 instead of superheated steam, for example. At least a part of these gases may also change phase from gas to liquid within the cylinder 11.

Also, although the nozzle part 31 in the above illustrated embodiments supplies a heating medium for heating resin to the cylinder 11, the nozzle part 31 may alternatively be used to supply a cooling medium for cooling the cylinder 11 in a case of cooling the cylinder 11 for maintenance purposes, for example.

Also, although the nozzle part 31 in the above illustrated embodiments is arranged at the cylinder 11 of a screw in-line type injection unit, the nozzle part 31 may alternatively be arranged at a cylinder of a screw pre-plasticizing type injection unit, for example. The screw pre-plasticizing type injection unit supplies resin melted at a plasticizing cylinder to an injection cylinder and injects the molten resin from the injection cylinder into a mold unit. In the case of arranging the nozzle part 31 at the screw pre-plasticizing type injection unit, the nozzle part 31 may be arranged at either one or both of the plasticizing cylinder and the injection cylinder. In the screw pre-plasticizing type injection unit, the nozzle part 31 is preferably arranged at the plasticizing cylinder where gas could flow more easily, for example.

Also, although the cylinder 11 in the above illustrated embodiments includes one nozzle part 31 and one discharge hole 33, in alternative embodiments, a cylinder of an injection molding machine may include more than one of the nozzle parts 31 and/or more than one of the discharge holes 33, for example.

## Claims

1. An injection molding machine comprising:
a cylinder (11) into which a molding material is supplied;
wherein the cylinder includes a supply part (31) that supplies a heating medium into the cylinder to come into direct contact with the molding material to heat the molding material,
wherein the supply part (31) includes a supply port (32) arranged at an inner wall of the cylinder (11) for supplying the heating medium into the cylinder,
**characterized in that**
the supply port (32) is arranged into an elongated shape extending in an axial direction of a screw (13), which is arranged within the cylinder, or an elongated shape extending in a diagonal direction with respect to an axial direction of the screw (13); and
**in that** a length (L) of the supply port (32) is longer than a pitch (P) of a flight (16) of the screw (13).

2. The injection molding machine as claimed in claim 1, wherein
the supply part (31) supplies superheated steam into the cylinder (11) as the heating medium for heating the molding material.

3. The injection molding machine as claimed in claim 1 or 2, wherein
at least a part of the heating medium supplied into the cylinder by the supply part (31) changes phase from gas to liquid within the cylinder (11).

4. The injection molding machine as claimed in any one of claims 1-3, wherein
the cylinder (11) includes a discharge part (33) that discharges the heating medium within the cylinder outside the cylinder.

5. The injection molding machine as claimed in claim 4, wherein
the cylinder includes a cooler (20) for cooling a rear part of the cylinder; and
the discharge part (33) is arranged at a front side of the cooler.

6. The injection molding machine as claimed in any one of claims 1-5, further comprising:
a heater (42) that heats the heating medium that is to be supplied to the cylinder; and
a reflux part (50) that arranges at least a part of the heating medium that is discharged outside the cylinder (11) to return to the heater (42).

7. The injection molding machine as claimed in any one of claims 1-6, further comprising:
a heat exchange part (60) that heats the heating medium to be supplied to the cylinder (11) using the heating medium discharged outside the cylinder.

8. An injection molding method,
the method comprising the following steps:
heating a molding material within a cylinder; and
supplying a heating medium into the cylinder to come into direct contact with the molding material to heat the molding material,
wherein a supply part (31) of the cylinder (11) includes a supply port (32) arranged at an inner wall of the cylinder (11) for supplying the heating medium into the cylinder;
wherein the supply port (32) is arranged into an elongated shape extending in an axial direction of a screw (13), which is arranged within the cylinder, or an elongated shape extending in a diagonal direction with respect to an axial direction of the screw (13); and
wherein a length (L) of the supply port (32) is longer than a pitch (P) of a flight (16) of the screw (13).

## Patentansprüche

1. Spritzgussmaschine umfassend:
einen Zylinder (11), in den ein Formmaterial zugeführt wird;
wobei der Zylinder ein Zufuhrteil (31) umfasst, das ein Heizmedium in den Zylinder zuführt, um in direkten Kontakt mit dem Formmaterial zu gelangen, um das Formmaterial zu erwärmen,
wobei das Zufuhrteil (31) einen Zufuhranschluss (32) umfasst, der an einer inneren Wand des Zylinders (11) zum Zuführen des Heizmediums in den Zylinder angeordnet ist,
**dadurch gekennzeichnet, dass**
der Zufuhranschluss (32) in einer länglichen Form angeordnet ist, welche sich in einer axialen Richtung einer Schraube (13) erstreckt, welche innerhalb des Zylinders angeordnet ist, oder einer länglichen Form, welche sich in einer diagonalen Richtung in Bezug auf eine axiale Richtung der Schraube (13) erstreckt; und
dass eine Länge (L) des Zufuhranschlusses (32) länger ist als eine Steigung (P) eines Gewindes (16) der Schraube (13).

2. Spritzgussmaschine nach Anspruch 1, wobei
das Zufuhrteil (31) überhitzten Dampf in den Zylinder (11) als Heizmedium zum Erwärmen des Formmaterials zuführt.

3. Spritzgussmaschine nach einem der Ansprüche 1 oder 2, wobei
zumindest ein Teil des Heizmediums, das durch das Zufuhrteil (31) in den Zylinder zugeführt wird, die Phase von gasförmig zu flüssig innerhalb des Zylinders (11) wechselt.

4. Spritzgussmaschine nach einem der Ansprüche 1 bis 3, wobei
der Zylinder (11) ein Entladungsteil (33) umfasst, welches das Heizmedium innerhalb des Zylinders außerhalb des Zylinders entlädt.

5. Spritzgussmaschine nach Anspruch 4, wobei
der Zylinder einen Kühler (20) zum Kühlen eines Hinterteils des Zylinders umfasst; und
das Entladungsteil (33) an einer Vorderseite des Kühlers angeordnet ist.

6. Spritzgussmaschine nach einem der Ansprüche 1 bis 5, ferner umfassend:
einen Heizer (42), welcher das Heizmedium, welches in den Zylinder zuzuführen ist, erwärmt; und
ein Rückflussteil (50), das zumindest einen Teil des Heizmediums, welches außerhalb des Zylinders (11) entladen ist, zur Rückführung zum Heizer (42) anordnet.

7. Spritzgussmaschine nach einem der Ansprüche 1 bis 6, ferner umfassend:
ein Wärmeaustauschteil (60), welches das dem Zylinder (11) zuzuführende Heizmedium unter Verwendung des Heizmediums, welches außerhalb des Zylinders entladen ist, erwärmt.

8. Spritzgussverfahren, wobei das Verfahren die folgenden Schritte umfasst:
Erwärmen eines Formmaterials innerhalb eines Zylinders;
und
Zuführen eines Heizmediums in den Zylinder, um in direkten Kontakt mit dem Formmaterial zu gelangen, um das Formmaterial zu erwärmen,
wobei ein Zufuhrteil (31) des Zylinders (11) einen Zufuhranschluss (32) umfasst, welcher an einer inneren Wand des Zylinders (11) zum Zuführen des Heizmediums in den Zylinder angeordnet ist;
wobei der Zufuhranschluss (32) in einer länglichen Form, welche sich in einer axialen Richtung einer Schraube (13) erstreckt, welche innerhalb des Zylinders angeordnet ist, oder einer länglichen Form, welche sich in einer diagonalen Richtung in Bezug auf eine axiale Richtung der Schraube (13) erstreckt, angeordnet ist; und
wobei eine Länge (L) des Zufuhranschlusses (32) länger ist als eine Steigung (P) eines Gewindes (16) der Schraube (13).

## Revendications

1. Machine de moulage par injection comprenant :
un cylindre (11) dans lequel une matière de moulage est alimentée;
dans laquelle le cylindre comprend une partie d'alimentation (31) qui alimente dans le cylindre un milieu de chauffage destiné à venir en contact direct avec la matière de moulage pour chauffer la matière de moulage,
dans laquelle la partie d'alimentation (31) comprend un orifice d'alimentation (32) agencé au niveau d'une paroi intérieure du cylindre (11) pour alimenter le milieu de chauffage dans le cylindre,
**caractérisé en ce que**
l'orifice d'alimentation (32) est ménagé sous une forme allongée s'étendant dans la direction axiale d'une vis (13), qui est ménagée à l'intérieur du cylindre, ou sous une forme allongée s'étendant dans une direction diagonale par rapport à une direction axiale de la vis (13) ; et
**en ce qu'**une longueur (L) de l'orifice d'alimentation (32) est supérieure à un pas (P) d'un filet (16) de la vis (13).

2. Machine de moulage par injection selon la revendication 1, dans laquelle
la partie d'alimentation (31) alimente de la vapeur surchauffée dans le cylindre (11) en tant que milieu de chauffage pour chauffer la matière de moulage.

3. Machine de moulage par injection selon l'une des revendications 1 ou 2, dans laquelle
au moins une partie du milieu de chauffage alimenté dans le cylindre par la partie d'alimentation (31) change de phase de gaz à liquide à l'intérieur du cylindre (11).

4. Machine de moulage par injection selon l'une quelconque des revendications 1 à-3, dans laquelle
le cylindre (11) comprend une partie d'évacuation (33) qui évacue le milieu de chauffage à l'intérieur du cylindre vers l'extérieur du cylindre.

5. Machine de moulage par injection selon la revendication 4, dans laquelle
le cylindre comprend un refroidisseur (20) pour refroidir une partie arrière du cylindre; et
la partie d'évacuation (33) est ménagée sur un côté avant du refroidisseur.

6. Machine de moulage par injection selon l'une quelconque des revendications 1 - 5, comprenant en outre :
un dispositif de chauffage (42) qui chauffe le milieu de chauffage qui doit être alimenté vers le cylindre ; et
une partie de reflux (50) qui fait en sorte qu'au moins une partie du milieu de chauffage qui est évacué à l'extérieur du cylindre (11) retourne dans le dispositif de chauffage (42).

7. Machine de moulage par injection selon l'une quelconque des revendications 1 - 6, comprenant en outre :
une partie échangeuse de chaleur (60) qui chauffe le milieu de chauffage à alimenter vers le cylindre (11) en utilisant le milieu de chauffage évacué à l'extérieur du cylindre.

8. Procédé de moulage par injection,
le procédé comprenant les étapes suivantes :
chauffer une matière de moulage à l'intérieur d'un cylindre; et
alimenter dans le cylindre un milieu de chauffage destiné à venir en contact direct avec la matière de moulage pour chauffer la matière de moulage;
dans lequel une partie d'alimentation (31) du cylindre (11) comprend un orifice d'alimentation (32) ménagé au niveau d'une paroi intérieure du cylindre (11) pour alimenter le milieu de chauffage dans le cylindre ;
dans lequel l'orifice d'alimentation (32) est ménagé sous une forme allongée s'étendant dans la direction axiale d'une vis (13), qui est disposée à l'intérieur du cylindre, ou sous une forme allongée s'étendant dans une direction diagonale par rapport à une direction axiale de la vis (13) ; et
dans lequel une longueur (L) de l'orifice d'alimentation (32) est supérieure à un pas (P) d'un filet (16) de la vis (13).
